# EUROPEAN PATENT SPECIFICATION

(11) **EP 1 624 993 B1**
(45) Date of publication and mention of the grant of the patent: **28.11.2007**
(21) Application number: 04722925.7
(22) Date of filing: 24.03.2004
(51) Int. Cl.: B23K 11/04, B23K 11/24, G05B 13/04, B23K 11/25

(54) **SYSTEM AND METHOD FOR SELF-ADAPTIVE ON-LINE CONTROL OF A FLASH-BUTT-WELDING MACHINE**
SYSTEM UND VERFAHREN ZUR SELBSTANPASSENDEN ON-LINE STEUERUNG EINER ABBRENNSTUMPFSCHWEISSMASCHINE
PROCEDE ET SYSTEME DE COMMANDE EN LIGNE D'UNE MACHINE A SOUDER PAR RAPPROCHEMENT

(30) Priority: 25.03.2003 IT MI20030589
(43) Date of publication of application: 15.02.2006
(73) Proprietor: DANIELI & C. OFFICINE MECCANICHE S.p.A., 35042 Buttrio (UD) (IT); Danieli Automation S.P.A., 33042 Buttrio (IT)
(72) Inventor: DRIUS, Francesco, I-33052 Cervignano (IT); GUASTINI, Fabio, I-34070 Dolegna Del Collio (IT); VENIER, Daniele, I-33038 S. Daniele Del Fruili (IT); BUZZI, Giuseppe, I-33040 Pradamano (IT)
(74) Representative: Cinquantini, Bruno
(86) International application number: PCT/IB2004/001022
(87) International publication number: WO 2004/085107

(56) References cited:
- EP-A- 1 044 753
- EP-A- 1 193 020
- US-A- 3 612 811
- US-A- 4 940 876
- PATENT ABSTRACTS OF JAPAN vol. 015, no. 164 (M-1106), 24 April 1991 (1991-04-24) & JP 03 032474 A (KAWASAKI STEEL CORP), 13 February 1991 (1991-02-13)
- GALANTUCCI L M: "COMPUTER-AIDED DESIGN FOR FLASH WELDS" WELDING INTERNATIONAL, WELDING INSTITUTE. ABINGTON, GB, vol. 8, no. 3, 1994, pages 195-204, XP000429686 ISSN: 0950-7116

## Description

The present invention relates to a method of on-line control of a butt-welding machine for bars, blooms or billets, for example of the flash-welding type, inserted in a continuous process for the manufacture of blooms or billets and to a control system specially devised for carrying out said method according to the preambles of, respectively, claims 1 and 6 (see, for example, US-A-3 612 811).

### State of the art

Known to the state of the art are butt-welding processes of the flash-welding type which comprise different steps.

The first step is that of pre-heating, which starts when the welding machine receives the external enabling command to start the welding operation. In this step, the billet is gripped between the clamps, and the joints are moved closer together and moved away from one another cyclically by causing a current of strong intensity to flow therein.

Pre-heating of the billets is carried out with pulses of short duration to prevent sticking of the ends of the billets with a force greater than the force of detachment that can be supplied by the clamps. If the pre-heating voltage is too high it may occur that arcs are started. During pre-heating, the control of current generally keeps the maximum current that the power supply is able to sustain in short-circuit. The purpose of the pre-heating is not so much that of heating the billets as that of burning and then smoothing out possible irregularities of the contact surfaces in which the current were to be concentrated. In fact, in view of the low resistance of the billets, with a current of 30000 A, it is not possible to supply a thermal power greater than some thousands of watts (3-5 kW), which produces just a modest heating lower than one degree centigrade per second.

Once the pre-heating step has terminated, normally after a pre-set time, the second step referred to as scintillation is performed. At the start of this second step, the electrical and mechanical paths of the process are aimed at causing the electric arc to start and diffuse between the joints in a regular way. Then, during fusion, the geometry of the electric arc and the thermal power, supplied to the joints, are kept on pre-set paths that optimize the result of the welding operation.

The maximum power that can be supplied in scintillation is set by acting on the supply voltage, which can be adjusted by acting on the transformation ratio of the transformer (defined as "tap changing") and on the angle of triggering of the phase partializer present on the primary winding. There is provided a position control, which adjusts the relative distance between the clamps by means of a hydraulic cylinder. Normally, said distance is adjusted, seeking to maintain the arc current constant. Typically, the position path set for the clamps is of a parabolic type, in so far as the scintillation step is split into three time intervals which must be managed with different speeds of mutual approach of the clamps.

In the first time interval, the surface of the billets is brought to 1500°C. In this step the speeds of the clamps could even be zero in so far as the metal is not yet melting.

In the second time interval, by maintaining the power employed constant, the steel melts. Initially, the steel is cold until it comes into the vicinity of the surface of the billet, and then the heat is diffused to a large extent towards the inside of the billet, and consequently the steel melts slowly. As the billet is heated, the temperature profile in the steel tends to a constant limit shape, and the rate of fusion becomes constant. In this time interval, the speed of the clamps must be such as to follow the advance of the surfaces that are consumed.

If the welding system is supplied with a constant-voltage and low-impedance generator, this tracking of the advance of the surfaces that are consumed is not a critical factor, in so far as, if the speed of the clamps is increased, the distance is reduced, and consequently the current and the thermal power increase, and thus the speed of fusion adapts automatically to that of the clamps. The higher the speed of the clamps, the higher the current and the welding power, and the smaller the arc voltage and the welding time. However, if the speed of the clamps increases excessively, the increase in power is no longer able to compensate for the speed of approach of the billets, and a short-circuit is produced so that the undesirable phenomenon of unstable welding is brought about.

In the course of welding, the steel that melts bums the oxygen in the vicinity of the welding zone, and this entails the advantage that the welding occurs in an almost inert atmosphere. If, however, the electric arc is extinguished, oxygen enters, which generates oxide that damages the weld. In this case a further disadvantage is that, with the electric arc extinguished, the cooling of the surface of the joints is so rapid as to cause problems of re-solidification. Also brief intervals of extinction of the arc, in the region of 100 ms, if they occur shortly before the subsequent upsetting step, can jeopardize the weld.

On the other hand, during the scintillation step, the molten steel exits from the gap and brings along with it possible oxides. Consequently, possible short interruptions of arc, at a distance far from the upsetting, do not always jeopardize the outcome of the welding operation; however, arc interruptions are in any case to be prevented because, in this case, the weld receives less energy and there is a dispersion of the results of the welding operation. This case can occur if there are employed angles of triggering of the partializer that are too large, so that current drops that are generated can render the electric arc unstable and cause frequent extinctions thereof that jeopardize the weld quality.

Finally, the scintillation step also envisages a third time interval in which the gap between the ends of the billets is closed for starting the upsetting step. It is important to close the gap very fast in such a way that, in the lapse of time between the extinction of the arc and the contact of the end surfaces, the air will not have time to enter, causing both oxidation of the steel and cooling of the surfaces of the billets. During the operation of closing of the gap, care is taken so that the arc is not extinguished, in such a way that the first part of the upsetting operation is carried out in the presence of a high current in order to compensate, by means of a supply of energy by the Joule effect, for cooling due to the diffusion of heat in the billets. The current is interrupted only about a hundred milliseconds after the short-circuit occurs.

The rate at which the steel is consumed when the arc is ignited is a critical parameter and is proportional to the welding power. Said rate should be on average 1,8-2 mm/sec. The starting rate of the welding process is half the average one.

With high-power welding, there is another disadvantage; namely, it happens that the steel bums fast, thus thinning out the "plastic" zone, i.e., the one that is found at a temperature of between 1400°C and 1500°C and which is used for upsetting. This can give rise to "cold" shuts. Instead, at powers that are too low, the welding time is lengthened and there may be an insufficient evacuation of the oxides that are formed during scintillation.

The time for ignition of the arc is in general chosen in such a way that a thickness of steel will be melted that is at least equal to the original maximum irregularity of the product and also taking into account the most conservative average speed of fusion, which is approximately 1.8 mm/sec.

The definition of a maximum threshold for the current has the purpose of interrupting the short-circuits rapidly by increasing the distance between the end surfaces to be welded. Said threshold is, however, quite critical to calibrate. In the case of incorrect calibration, the production of short-circuits in the final step of scintillation can jeopardize the goodness of the weld. Even though short-circuits produced at the start of the scintillation step do not jeopardize the weld seriously if they are interrupted within about a hundred milliseconds, they do, however, cause a reduction in the energy supplied to the joints, and this leads to a dispersion of the results.

From what has been said, it emerges that the part of the scintillation step that has the greatest influence on the quality of the welding operation is the final one (the last 2-3 seconds), in which it is absolutely necessary to prevent extinctions of the arc or power drops from occurring.

The third step of the welding process is that of upsetting and follows the scintillation step. In this step, the force of pressure between the billets and the current used are controlled to follow pre-set paths that optimize the quality of the welded joint. At the end of fusion, the current is set at a maximum value, in order to favour the fusion of any areas that may have remained cold and oxidized, which could cause resistance during approach of the two surfaces, and the servo valve that controls positioning of the clamps of the welding machine is opened completely so as to achieve the maximum gap closing speed. The pressure is determined by the expansion vessel PH (high pressure) that supplies the hydraulic circuit. After extinction of the arc occurs, it is important to close the gap as soon as possible to prevent intrusion of air into the welding zone and cooling of the surfaces.

The current goes to zero only when the useful power drops below a given threshold (e.g., 50 kW) or there arises the condition of Time Out (e.g., 200 ms) in the control system.

From an analysis of the product obtained with some known flash-welding machines, there has been detected a high percentage of joints presenting welding defects that managed to reach the rolling stands Without being detected by the quality control. These badly welded joints caused problems of quality in the end product and in extreme cases even jamming of the rolling mill.

An in-depth study of the problem, based upon the acquisition of the data on hundreds of welds, has led to the conclusion that the large statistical dispersion of the welding results arises from the large dispersion of certain factors of disturbance that are involved in the welding process. The most important phenomena of disturbance identified are: the irregularities present in the geometry of the surfaces of the joints to be welded, which frequently have areas of the end surfaces of the billets set very far apart from one another which do not mate up, and the different initial temperature of the steel.

It has been found that the control systems according to the state of the art used in the regulation of the welding processes in the machines are unable to deal with major parametric variations of the process when these occur, which leads to the dispersion of the results of the welding process.

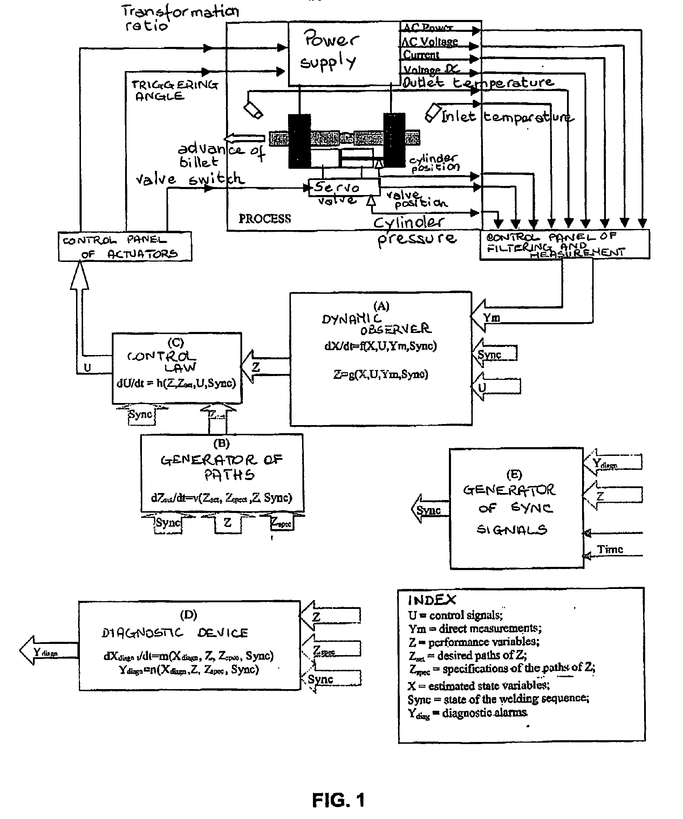

Furthermore, amongst the systems for controlling welding for a.c. welding machines, no controller is known that is able to meet the requirements of ruggedness called for to enable operation in certain unfavourable conditions. The majority of known welding controllers (see the following publications: A. P. Chekmarev et al., "Determining the flash allowance for welding hot billets in continuous rolling mills", Svar. Proiz., 1970, No. 8, p.p. 5-7 and "A new control system for the K-190P rail flash welding machine"; N. V. Podola, V. P. Krivenos, B. L. Grabchev, "Automatic Welding", Vol. 36, No. 8, Aug. 1983, p.p. 40-43, Figure 1, Table 3, ref. "AUTOMATIC WELDING"). is based upon a system that causes the clamps to follow a parabolic path of open-loop position, i.e., irrespective of the measurements of voltage and arc current. Said path is modified only in the case of occurrence of short-circuits, in which case there is added, to the parabolic path of pre-defined position, a small step of opening-up of the clamps.

In this way, the system of movement is unable to stabilize the geometry of the arc in so far as it does not take said geometry into consideration.

The patent US-A-4.940.876 describes an arc-impedance controller for a.c. welding machines. The regulator maintains the arc impedance constant by acting on the hydraulic position control. The short-circuit impedance, which is an essential parameter in the system of calculation adopted, is measured and re-updated, in the upsetting step, at the end of each welding cycle. In this way, this control system does not, however, take into account in any way the fact that the characteristic of the arc in the initial moments of the welding process varies enormously and hence does not remain constant in the course of a welding cycle.

This variation occurs because, especially in the presence of irregular end surfaces, the electric arc starts first in one point of the joints Where these are set closer to one another and is then widened progressively to the rest of the end surface, employing, however, a few seconds to involve the entire joint. In order to maintain the arc impedance constant in this step in the presence of an arc that changes characteristic, the said control system is unable to prevent short-circuits from being formed during ignition. Since at each short-circuit there is an extinction of the arc and hence a reduction in the thermal energy supplied to the joints, this type of controller produces irregularities in the energy supplied to the weld, and hence there is a dispersion of the results.

Document US-A-3612811 discloses a method of effecting electrical butt-welding of workpieces by continuously flashing the ends of the workpieces. The apparatus for welding control is provided with two channels one of which comprises two temperature pickups. A computer, based on these inputs, controls an actuator for moving the workpieces in the course of the flashing process.

### Summary of the invention

The main purpose of the present invention is to eliminate the disadvantages cited, according to a first aspect of the invention, by means of a method for controlling a butt-welding machine of the "flash-welding" type according to Claim 1 and, according to a second aspect of the invention, by means of a control system with the characteristics of Claim 6.

A diagnostics system according to the present invention, by acting simultaneously on the variable parameters that intervene in the various steps of the welding operation, is able to optimize the results of said operation.

In particular, the present invention overcomes problems left unresolved by known controllers and, in particular, by the impedance controller described in US-A-4940876 mentioned previously, which, amongst controllers, constitutes one of the more advanced embodiments but which does not act on the supply voltage to improve the welding control.

In order to obtain optimal results, the control system according to the invention controls, during the scintillation step, not only arc impedance but also a plurality of other variables, amongst which, in the first place, the arc length. Thanks to this fact, there is drastically reduced the possibility of short-circuits occurring in so far as the control of length of the arc in effect prevents the joints from touching one another. This is done by estimating the arc length with a mathematical model that is based upon the knowledge of the physical laws that determine the behaviour of the process, and on direct measurements. Furthermore, to guarantee the supply of the power desired also on an variable arc impedance, the primary voltage is controlled by acting on the angle of triggering of the partializer. If upon starting of the arc at the start of the scintillation step the arc is confined in a small part of the facing surfaces that are to be welded on account of irregularities of said surfaces, said arc thus presents, given the same length, a high impedance. The control system increases the supply voltage so as to supply in any case full power to the arc that melts more rapidly the surface irregularities, on which the arc has started. This hence favours a rapid elimination of the irregularities by evening out the end surfaces to be welded.

Then, the thermal power supplied is reduced progressively in the last second of the scintillation step to give rise to a more extensive 'plastic' layer in the area of the billets in the vicinity of the end surfaces, which improves the quality of the weld.

In order to overcome also the problem of extreme variations in the conditions for which the control system does not have margins of time that can be used and of power that can be supplied, sufficient for bringing the welding operation to an end properly, there is advantageously provided a system of on-line diagnosis that recognizes the welded joint in a reliable way and enables elimination thereof from the processing line.

A further advantage of the control system according to the invention is the presence of a dynamic state observer that, considering the entire history of the welding process up to the present moment, is able to reconstruct and also to forecast for the subsequent instants the trend of a large number of state and performance variables, on which the action of control and diagnosis is based. The simultaneous control of these variables, for the purpose of keeping them on pre-defined paths, leads to an improvement in performance as compared to known control systems, which are based only on the detection of some variables that are directly measurable, a fact which renders the welding process less reliable.

The combination of all these elements, envisaged in the control system according to the invention, determines the superior weld quality in the billets.

Amongst the main purposes that the control system makes possible, there is that of rendering more reliable and repetitive, in each step of the welding operation, the trend of the electrical, thermal and mechanical state variables of the welding system, as well as that of possibly not allowing any joints in which the welding operation has not been altogether successful to move on for the subsequent processing steps.

### List of figures

Further advantages that may be achieved with the present invention will emerge more clearly to a person skilled in the art from the ensuing detailed description of a particular and non-limiting embodiment of a system for on-line control of a butt-welding machine with reference to the following figures, in which:
Figure 1 is the block diagram of the control system according to the invention;
Figure 2 is the functional logic diagram of the method according to the invention; and
Figure 3 presents a number of graphs with optimal paths of some performance variables.

### Detailed description of the invention

The solution according to the invention for solving the technical problem provides for a method for control and on-line diagnosis of a butt-welding machine of the "flash-welding" type, adapted to be included in a continuous process for the fabrication of blooms and billets.

The method according to the invention substantially envisages controlling, on the basis of pre-determined criteria illustrated in greater detail in the ensuing description, two actuators that act respectively on the angle of triggering of the partializer for controlling the electric machine that supplies the thermal power to the weld and on the opening of the valve that controls positioning of the clamps of the welding machine.

With particular reference to Figure 1, in which the following symbols are used:
U = control signals (transformation rate, triggering angle, valve switch);
Ym = direct measurements (AC power, AC voltage, current, voltage DC, outlet temperature, inlet temperature, cylinder position, valve position, cylinder pressure);
Z = performance variables;
Zₛₑₜ = desired paths of Z;
Z_{spec}= specifications of the paths of Z;
X = estimated state variables;
Sync = state of the welding sequence; and
Y_{diag} = diagnostic alarms,
the method according to the invention is implemented via a control system comprising a multivariable dynamic control law, block C, based upon techniques of multi-objective optimization and of robust synthesis capable of maintaining under accurate control all the paths of the variables that determine the quality of the process, even in conditions where there is uncertainty on the parameters that define the characteristic of the arc and the geometry of the joints, so as to cause the trends of all the electrical, mechanical and thermal quantities to converge rapidly, right from the start of the welding operation, towards the desired values, notwithstanding the occurrence of wide parametric variations in the course of the welding process.

According to a particularly advantageous aspect of the invention, the control system also envisages a diagnostics system capable of identifying the joints that it had not been possible to weld correctly on account of the presence of extreme values of the disturbance phenomena.

The dynamic control law, block C, acts simultaneously on the angle of triggering of a partializer, which regulates the supply, and on the hydraulic control of movement of the clamps by maintaining the real trend of the electrical, mechanical and thermal values of the welding process close to the optimal trend. Since not all the variables that determine the trend of the welding process can be measured, there is provided a method of estimation based upon a mathematical and heuristic model that reconstructs on line the variables necessary for completing the information on the state of the weld. On the basis of these state variables, the variables that determine the quality of the process are identified, the trend of which determines the goodness of the global result of the weld. For these variables, which we shall call "performance variables", through tests, the optimal paths that should be followed during the welding operation have been determined.

On the basis of the performance variables supplied by a dynamic state observer there has been developed also a diagnostics system capable of detecting whether the weld has failed to reach the desired quality on account of the occurrence of some problem. The alarm generated by this diagnostics system enables the defective joint to be prevented from proceeding to the subsequent processing step.

The control system according to the invention comprises the functional blocks described in what follows with particular reference to Figure 1.

The system comprises a dynamic state observer, block A, which detects the state of the welding process X, detecting also those components that are not measured directly but the trend of which has important effects on the final result. The dynamic observer, block A, uses the direct measurements Ym, the input controls U, and a set of physical laws and of experimental rules that define the trend of the process (f(X, U, Ym, Sync)) to obtain an image of the state in which the welding process is found and to forecast its evolution dX/dt in time. The dynamic state observer, block A, supplies a plurality of outputs of performance Z that represent those variables the paths of which define a good result of the welding operation.

Also included in this plurality of performance variables Z are quantities which, since they are not measurable directly, are obtained by interpreting the dynamic evolution of the process through physical and experimental laws appropriately stored in the dynamic observer A. Thanks to said plurality of performance variables Z, the activity of control and on-line diagnostics of the control system is performed. The variables that in the various steps have the function of identifying the state and the results of the welding process are reconstructed by the dynamic state observer A.

Amongst the performance variables considered are advantageously: pressure in the cylinder; position of the cylinder; speed of the cylinder; position of the servo valve; angle of triggering of the partializer; transformation ratio of the transformer, used only in the case where the controller is able to control it automatically; electric power absorbed by the network; voltage of the d.c. supply to the terminals of the transformer; arc voltage; arc current; thermal energy supplied to the joints; thermal power communicated to the joints; thermal map of the joints; width of the gap between the joints; quantity of molten metal; rate of fusion of the joints; arc power; electric power supplied by the power supply; and arc impedance.

The dynamic state observer, block A, envisages the trend of the process in response to the control inputs with the use of algorithms that take into account physical and experimental laws, and uses the measurements only for updating the forecasts made and for correcting the value of those parameters that are subject to time variations.

Amongst the parameters that can vary in time and that the dynamic state observer, block A, identifies on line in the course of the execution of the welding process there are: the parameters corresponding to the voltage-current-arc length characteristic, the thermal efficiency of the arc, defined as ratio between thermal energy supplied to the joints and electrical energy supplied to the arc, the efficiency of the power supply, the resistance of the d.c. circuit, and the position of the joints at the start of welding operation. In the case of a failure to some system of direct measurement of a variable, the dynamic state observer A continues in any case to forecast the trend of said variable, and, even though the latter is no longer measured, the dynamic control law, block C, is able to regulate the process even so, albeit with slightly degraded performance.

Another element comprised in the control system is the dynamic generator of paths for the performance variables, block B, which uses algorithms based upon physical laws and experimental rules, of the type g(X, U, Ym, Sync). The dynamic generator of paths supplies the optimal paths Zₛₑₜ that it is desired to get the performance variables Z to follow. The paths are configured via a set of parameters Z_{spec} appropriately chosen by the designer.

In the control system there is provided the already cited dynamic control law, block C, which calculates the control for the actuators U on the basis of the values of the performance variables Z and of the optimal paths Zₛₑₜ.

There is moreover provided a dynamic diagnostic device, block D, which, by comparing the paths of the performance variables with the desired ones, generates indices of weld quality X_{diag}. If these indices of quality fall outside a pre-determined interval, an alarm signal is generated that causes adoption by the dynamic control law, block C, of a strategy of recovery of the weld, which envisages the interruption of the welding operation prior to the upsetting step. In extreme cases, in which the alarm has been generated during the upsetting step, the next step will be cutting of the welded joint. The dynamic diagnostic device D also controls the efficiency of the measuring and actuating device. In the case of a failure, alarms are generated, which induce the dynamic control law, block C, to adopt a control strategy suitable for operating in degraded conditions.

The system also comprises a generator of sync signals, represented by block E, (also called Sequence Manager) that induces the dynamic control law, block C, to adopt, in each step of the welding operation, the appropriate operating strategy, sending the appropriate signals to all the blocks of the control system.

The operating modality of the dynamic state observer, block A, according to the invention is performed in the following way. Throughout the welding process, the state observer, block A, follows the profile of the joint to be welded. By detecting the behaviour of the actuators U, which comprise an electric power supply and a hydraulic valve, the dynamic state observer A calculates the state of voltages and currents of the circuit, calculates the balance of thermal power in the joints, detects the thermal map of the billet, the geometry of the electric arc, and the state of the system of hydraulic movement. By comparing the estimated values of the variables with the respective effective measurements, the state observer A updates the estimated state and the value of the parameters that are subject to variation by carrying out their identification on line.

The strategy of observation changes in the different steps of the welding process according to the operating modalities defined by the generator of sync signals, block E. From the reconstructed state of the process, the state observer generates performance variables Z that represent the main paths to be controlled for a good weld result, the variables on which to carry out the diagnostic inference, the variables that enable the sync generator to establish the passages from one step to another of the welding process and the changes of operating mode.

The operating mode of the generator of optimal paths, block B, is described in what follows. The optimal paths Zₛₑₜ are variable in time and are calculated starting from certain set-up parameters Z_{spec} of the machine.

The performance variables Z to which paths are assigned for control of the pre-heating step comprise the force of compression of the billets to be welded, the speed of displacement of the joints, the current to be made to flow in the joints, and the time of contact between the joints.

The performance variables Z to which paths are assigned for control of the scintillation step comprise the length of the arc, the thermal power supplied by the arc, the arc voltage, the arc impedance, and the temperature profile on the joints.

The performance variables Z. to which paths are assigned for control of the upsetting step comprise the pressure of upsetting of the billets, the current to be made to flow in the joints, and the position of the joints.

The optimal paths for the performance variables Z that are a dynamic function of the time and of the performance variables Z themselves and are generated, using appropriate algorithms, which incorporate a set of rules obtained from physical laws and from experimental data.

Since the performance variables are mutually dependent, being linked by precise relations, e.g., arc impedance, arc voltage, arc current, there suffice a few set-up parameters Z_{spec} in order to define the trends of innumerable paths for the performance variables Z.

The operating modality of the dynamic control law, block C, is described in what follows. The dynamic control law, block C, induces a subset of the performance variables Z, selected according to the step of the process, to follow the respective optimal paths. If it is not possible to follow exactly all the paths specified, the dynamic control law, block C, minimizes a weighted average of the tracking errors of the paths; the weights of this average are determined by the control gains and calculated with a technique of multi-objective optimization. In this way the biggest errors will be the ones that will yield the greatest contribution to the action of control.

The operating modality of the dynamic diagnostic device, block D, is performed as follows. The primary purpose of the diagnostic device is that of interrupting the welding operation in the event of some unforeseeable factor of disturbance detected by the dynamic diagnostic device were to degrade the quality of the weld. A poor weld can be extremely dangerous since it can cause jamming in the subsequent processing steps, in particular in the rolling mill.

The most frequent and most critical factor of disturbance consists in a marked irregularity in the profile of the joints to be welded; however, there may occur also other disturbance such as high resistances of contact with the clamps that do not enable communication of the desired power to the arc, variations in line voltage, etc.

A further function performed by the dynamic diagnostic device D is that of detecting possible failures in the welding system.

The dynamic diagnostic device, block D, is supplied by the performance variables Z and by the path specifications Zₛₑₜ. Starting from these input variables, it generates dynamically within it a number of diagnostic variables Ydiagn by means of an algorithm based upon a set of physical rules and experimental intervals of values X_{diagn}. If the diagnostic variables Ydiagn exit from the respective intervals of values pre-set experimentally, the diagnostic device D issues specific alarms. The alarms are sent to the generator of sync signals, block E, which implements accordingly the adequate response strategy.

The operating modality of the sync-signal generator, block E, is described in what follows. The sync-signal generator has the principal task of informing the functional block of the control system on the state of the welding sequence. The welding sequence fundamentally comprises the three steps mentioned: pre-heating, scintillation, and upsetting. Each of these is further split into substeps. The start of the welding cycle is determined by an enabling signal, which is issued by the central control system of the rolling mill, which can be integrated in the system for controlling welding, if necessary, in the instant in which the billet to be welded has been correctly positioned on the welding machine.

Transition from one step to another of the welding cycle is determined on the basis of the time or on the basis of certain conditions of the performance variables Z being reached.

The sync-signal generator, block E, informs the blocks of the control system as regards the step and the substep of the welding cycle in which it is operating.

The operating modality of each step of the control process can be modified in the event where alarms have been issued by the diagnostic device, block D. The sync generator receives said diagnostic alarms, interprets them, and sends, to the blocks of the control system, the commands to proceed in the correct mode of degraded operation.

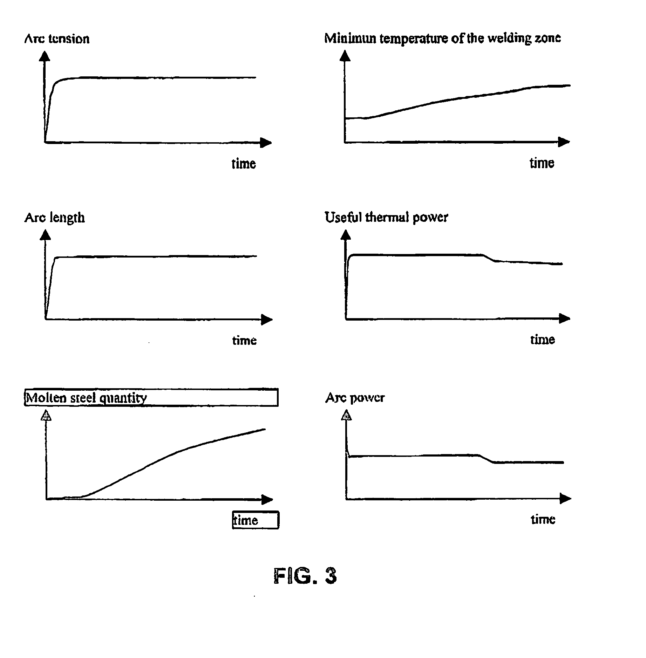

A number of optimal paths set during scintillation on some performance variables not directly measured are illustrated, by way of advantageous example, in the graphs of Figure 3,.

The system for controlling a butt-welding machine according to the invention described above can be obtained by means of a purposely designed computerized system, or also, in a particularly advantageous way, by means of a program for a general-purpose electronic processor, e.g., a PC. In this case, the functional blocks described above, i.e., the dynamic state observer A, the dynamic path generator B, the dynamic control law C, the generator of sync signals E, and the dynamic diagnostics system D correspond to the software blocks, appropriately written in the programming language suited to optimal use on the type of processor used for control of the welding machine.

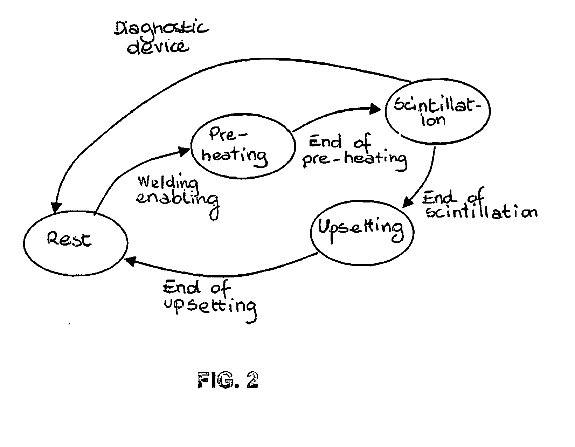

The diagram indicated in Figure 2 represents the flow, or logic functional diagram, of the process with the indication of the quantities that enable the passage from one stage of the welding process to the next. There emerges clearly the advantage that the presence of the diagnostics system according to the invention affords with respect to known control systems, whereby via on-line check, during the flashing step, the quality of the joint can discriminate the subsequent state. In this way, the defective welds can be rejected without this creating problems during the subsequent processing operations.

## Claims

1. A method for on-line control of a butt-welding machine of the flash-welding type for bars, blooms or billets, during welding cycles, comprising the steps of
- measuring on the machine by an acquisition system direct measurements,
- controlling an actuation of a valve controlling positioning of clamps of the welding machine; and
- controlling the triggering angle of a partializer for controlling the thermal power supplied to the welding process; said controlling steps being regulated on the basis of an analysis by a dynamic state observer (A) of the history of the welding process during execution of each welding cycle, **characterised by** the fact that said dynamic state observer (A) estimates, by means of a mathematical model, the trend of a plurality of state variables (X) and of performance variables (Z), the latter comprising arc length, arc impedance, primary voltage and arc current, used as a basis for controlling the welding cycle itself and the subsequent welding cycles, using a plurality of direct measurements (Ym) made by the acquisition system.

2. The method according to Claim 1, wherein for regulating said controlling steps there is provided:
- observing state variables (X) of the welding cycles by the dynamic state observer (A);
- defining pre-determined optimal paths (Zₛₑₜ) to be followed by a plurality of performance variables (Z) by means of a dynamic path generator (B) for performance variables (Z);
- executing a dynamic control law (C) based upon the value of the performance variables (Z), of the optimal paths (Zₛₑₜ) and of an operating strategy determined according to the step that the welding process is undergoing; and
- generating sync signals (Sync) by means of a signal generator (E), on the basis of which the dynamic control law (C) adopts the given operating strategies.

3. The method according to Claim 2, wherein the dynamic control law (C), during a scintillation step of the welding process, maintains the arc length constant and varies the primary voltage on the basis of the variation of arc impedance.

4. The method according to Claim 3, wherein an on-line diagnosis is provided by a dynamic diagnostics system (D), for which the comparison of the paths of the performance variables (Z) is made with the desired paths (Zₛₑₜ) by said dynamic diagnostics system (D), generating weld quality indices.

5. The method according to Claim 6, wherein there is provided automatic on-line variation of the transformation ratio of a transformer (tap changing) for supply of the butt-welding machine.

6. A system for controlling a butt-welding machine for bars, blooms or billets, wherein the machine comprises a valve for controlling positioning of clamps of the machine, and a partializer, wherein the control system is adapted to perform the method according to claim 1 and comprises:
- an acquisition system for realising direct measurements on the machine, and **characterised by** further comprising
- a dynamic state observer (A) adapted for observing a plurality of state variables (X) of a welding process carried out by said machine;
- a dynamic path generator (B) for performance variables (Z), adapted for defining pre-determined optimal paths (Zₛₑₜ) for the performance variables (Z) to follow, the latter comprising arc length, arc impedance, primary voltage and arc current;
- the dynamic state observer and the dynamic path generator being suited for estimating through mathematical model implemented therein the trend of the state variables and of performance variables.
- a dynamic control law (C) adapted for controlling the valve and the partializer on the basis of the value of the performance variables (Z) and of the optimal pre-determined paths (Zₛₑₜ); and
- a generator (E) of sync signals adapted for generating sync signals (Sync).

7. The system according to Claim 6, wherein there is provided a transformation ratio variator (tap changer), adapted for controllling the transformation ratio.

8. The system according to Claim 7, wherein a dynamic diagnostics system (D) is provided, adapted for generating indices of weld quality, comparing the paths of the performance variables (Z) with the desired paths (Zₛₑₜ).

9. The system according to Claim 8, wherein the observer (A) of dynamic state, the dynamic path generator (B), the dynamic control law (C), the generator of sync signals (E), and the dynamic diagnostics system (D) are implemented by means of a computer program.

## Patentansprüche

1. Verfahren zur Online-Steuerung einer Stumpfschweißmaschine vom Abschmelzschweißtyp für Stäbe, Vorblöcke oder Walzblöcke während Schweißzyklen, wobei das Verfahren die folgenden Schritte umfasst:
- Messen an der Maschine durch direkte Messungen eines Erfassungssystems,
- Steuern einer Betätigung eines Ventils, das die Positionierung von Klemmbacken der Schweißmaschine steuert; und
- Steuern des Auslösewinkels einer Drosselvorrichtung zum Steuern der Wärmeleistung, die dem Schweißprozess zugeführt wird; wobei die genannten Steuerschritte auf der Grundlage einer Analyse durch einen Beobachter (A) eines dynamischen Zustands der Historie des Schweißprozesses während der Ausführung jedes Schweißzyklus reguliert werden, **gekennzeichnet durch** die Tatsache, dass der genannte Beobachter (A) eines dynamischen Zustands unter Verwendung mehrerer direkter Messungen (Ym), die **durch** das Erfassungssystem durchgeführt werden, mittels eines mathematischen Modells den Trend mehrerer Zustandsvariablen (X) und Leistungsvariablen (Z) schätzt, wobei die Letzteren die Lichtbogenlänge, die Lichtbogenimpedanz, die Primärspannung und den Lichtbogenstrom umfassen, die als eine Grundlage für die Steuerung des Schweißzyklus selbst und der nachfolgenden Schweißzyklen verwendet werden.

2. Verfahren gemäß Anspruch 1, bei dem Folgendes vorgesehen ist, um die genannten Steuerschritte zu regulieren:
- Beobachten der Zustandsvariablen (X) der Schweißzyklen durch den Beobachter (A) eines dynamischen Zustands;
- Definieren vorgegebener optimaler Wege (Zₛₑₜ), die von mehreren Leistungsvariablen (Z) befolgt werden sollen, mittels eines Generators (B) dynamischer Wege für Leistungsvariablen (Z);
- Ausführen eines dynamischen Steuergesetzes (C) auf der Grundlage des Werts der Leistungsvariablen (Z), der optimalen Wege (Zₛₑₜ) und einer Betriebsstrategie, die gemäß dem Schritt bestimmt wird, den der Schweißprozess durchläuft; und
- Erzeugen von Sync-Signalen (Sync) mittels eines Signalgenerators (E), auf deren Grundlage das dynamische Steuergesetz (C) die gegebenen Betriebsstrategien annimmt.

3. Verfahren gemäß Anspruch 2, bei dem das dynamische Steuergesetz (C) während eines Szintillationsschritts des Schweißprozesses die Lichtbogenlänge konstant hält und auf der Grundlage der Änderung der Lichtbogenimpedanz die Primärspannung ändert.

4. Verfahren gemäß Anspruch 3, bei dem durch ein dynamisches Diagnosesystem (D) eine Online-Diagnose geliefert wird, für die der Vergleich der Wege der Leistungsvariablen (Z) mit den Sollwegen (Zₛₑₜ) durch das genannte dynamische Diagnosesystem (D) vorgenommen wird, das Schweißqualitätsindizes erzeugt.

5. Verfahren gemäß Anspruch 6, bei dem eine automatische Online-Änderung des Übersetzungsverhältnisses eines Transformators (Abgriffänderung) zur Versorgung der Stumpfschweißmaschine vorgesehen ist.

6. System zum Steuern einer Stumpfschweißmaschine für Stäbe, Vorblöcke oder Walzblöcke, wobei die Maschine ein Ventil zum Steuern der Positionierung von Klemmbacken der Maschine und eine Drosselvorrichtung umfasst, wobei das Steuersystem so ausgelegt ist, dass es das Verfahren gemäß Anspruch 1 ausführen kann, und wobei es umfasst:
- ein Erfassungssystem zum Realisieren direkter Messungen an der Maschine, und **dadurch gekennzeichnet, dass** es ferner umfasst
- einen Beobachter (A) eines dynamischen Zustands, der so ausgelegt ist, dass er mehrere Zustandsvariablen (X) eines Schweißprozesses beobachten kann, der von der genannten Maschine ausgeführt wird;
- einen Generator (B) dynamischer Wege für Leistungsvariablen (Z), der so ausgelegt ist, dass er vorgegebene zu befolgende optimale Wege (Zₛₑₜ) für die Leistungsvariablen (Z) definieren kann, wobei die Letzteren die Lichtbogenlänge, die Lichtbogenimpedanz, die Primärspannung und den Lichtbogenstrom umfassen;
- dass der Beobachter eines dynamischen Zustands und der Generator dynamischer Wege geeignet sind, durch ein darin implementiertes mathematisches Modell den Trend der Zustandvariablen und von Leistungsvariablen zu schätzen;
- ein dynamisches Steuergesetz (C), das so ausgelegt ist, dass es auf der Grundlage des Werts der Leistungsvariablen (Z) und der optimalen vorgegebenen Wege (Zₛₑₜ) das Ventil und die Drosselvorrichtung steuern kann; und
- einen Generator (E) für Sync-Signale, der so ausgelegt ist, dass er Sync-Signale (Sync) erzeugen kann.

7. System gemäß Anspruch 6, bei dem eine Übersetzungsverhältnis-Änderungseinrichtung (Abgriffänderungseinrichtung) vorgesehen ist, die so ausgelegt ist, dass sie das Übersetzungsverhältnis steuern kann.

8. System gemäß Anspruch 7, bei dem ein dynamisches Diagnosesystem (D) vorgesehen ist, das so ausgelegt ist, dass es Indizes der Schweißqualität erzeugen kann, wobei es die Wege der Leistungsvariablen (Z) mit den Sollwegen (Zₛₑₜ) vergleicht.

9. System gemäß Anspruch 8, bei dem der Beobachter (A) eines dynamischen Zustands, der Generator (B) dynamischer Wege, das dynamische Steuergesetz (C), der Generator von Sync-Signalen (E) und das dynamische Diagnosesystem (D) mittels eines Computerprogramms implementiert werden.

## Revendications

1. Procédé de commande en ligne d'une machine de soudage bout-à-bout du type de soudage par étincelage pour des barres, blooms ou billettes, pendant des cycles de soudage, comprenant les étapes consistant à :
- prendre sur la machine par un système d'acquisition des mesures directes,
- commander l'actionnement d'une soupape commandant le positionnement de pinces de la machine de soudage ; et
- commander l'angle de déclenchement d'un partialiseur pour commander la puissance thermique fournie au processus de soudage ; lesdites étapes de commande étant réglées sur la base d'une analyse par un observateur d'état dynamique (A) de l'historique du processus de soudage pendant l'exécution de chaque cycle de soudage, **caractérisé par le fait que** ledit observateur d'état dynamique (A) estime, au moyen d'un modèle mathématique, la tendance d'une pluralité de variables d'état (X) et de variables de performance (Z), les dernières comprenant une longueur d'arc, l'impédance de l'arc, la tension primaire et le courant d'arc, utilisées comme base pour commander le cycle de soudage lui-même et les cycles de soudage suivants, utilisant une pluralité de mesures directes (Ym) effectuées par le système d'acquisition.

2. Procédé selon la revendication 1, où pour régler lesdites étapes de commande, il est prévu :
- l'observation des variables d'état (X) des cycles de soudage par l'observateur d'état dynamique (A) ;
- la définition de chemins optiques prédéterminés (Zₛₑₜ) destinés à être suivis par une pluralité de variables de performance (Z) au moyen d'un générateur de chemin dynamique (B) pour des variables de performance (Z) ;
- l'exécution d'une loi de commande dynamique (C) basée sur la valeur des variables de performance (Z), des chemins optiques (Zₛₑₜ) et d'une stratégie d'opération déterminée en accord avec l'étape à laquelle le processus de soudage est soumis ; et
- la génération de signaux de synchronisation (Sync) par un générateur de signaux (E), sur la base desquels la loi de commande dynamique (C) adopte les stratégies d'opération données.

3. Procédé selon la revendication 2, où la loi de commande dynamique (C), pendant une étape de scintillation du processus de soudage, maintient la longueur d'arc constante et fait varier la tension primaire sur la base de la variation d'une impédance de l'arc.

4. Procédé selon la revendication 3, où un diagnostic en ligne est fourni par un système de diagnostic dynamique (D) pour lequel la comparaison des chemins des variables de performance (Z) est effectuée avec les chemins souhaités (Zₛₑₜ) par ledit système de diagnostic dynamique (D), produisant des indices de la qualité de soudage.

5. Procédé selon la revendication 6, où il est réalisé une variation automatique en ligne du taux de transformation d'un transformateur (ajustage de tension) pour l'alimentation de la machine de soudage bout-à-bout.

6. Système de commande d'une machine de soudage bout-à-bout pour des barres, des blooms ou des billettes, où la machine comprend une soupape pour commander le positionnement de pinces de la machine, et un partialiseur, où le système de commande est apte à exécuter le procédé selon la revendication 1 et comprend :
- un système d'acquisition pour réaliser des mesures directes sur la machine et,
**caractérisé en** comprenant en outre
- un observateur d'état dynamique (A) apte à observer plusieurs variables d'état (X) d'un processus de soudage exécuté par ladite machine ;
- un générateur de chemin dynamique (B) pour les variables de performance (7), apte à définir des chemins optimaux prédéterminés (Zₛₑₜ) pour les variables de performance (Z) à suivre, les dernières comprenant la longueur d'arc, l'impédance de l'arc, la tension primaire et le courant de l'arc ;
- l'observateur d'état dynamique et le générateur de chemin dynamique convenant pour estimer par un modèle mathématique mis en oeuvre dans ceux-ci la tendance des variables d'état et des variables de performance ;
- une loi de commande dynamique (C) apte à commander la soupape et le partialiseur sur la base de la valeur des variables de performance (Z) et des chemins optimums prédéterminés (Zₛₑₜ) ; et
- un générateur (E) de signaux de synchronisation apte à produire des signaux de synchronisation (Sync).

7. Système selon la revendication 6, où est réalisé un variateur de taux de transformation (ajusteur de tension) apte à commander le rapport de transformation.

8. Système selon la revendication 7, où un système de diagnostic dynamique (D) est réalisé, apte à produire des indices de la qualité de soudage, à comparer les chemins des variables de performance (Z) avec les chemins souhaités (Zₛₑₜ).

9. Système selon la revendication 8, où l'observateur (A) de l'état dynamique, le générateur de chemin dynamique (B), la loi de commande dynamique (C), le générateur des signaux de synchronisation (E) et le système de diagnostic dynamique (D) sont mis en oeuvre par un programme d'ordinateur.
